# EUROPÄISCHE PATENTSCHRIFT

(11) **EP 3 389 969 B1**
(45) Veröffentlichungstag und Bekanntmachung des Hinweises auf die Patenterteilung: **23.03.2022**
(21) Anmeldenummer: 16802076.6
(22) Anmeldetag: 29.11.2016
(51) Int. Cl.: B29B 9/06, B29B 9/12, C08G 69/18, C08G 69/20, B29K 77/00, B29K 105/00, B29C 48/02, B29C 48/04, B29C 48/05

(54) **VERFAHREN ZUR HERSTELLUNG VON FESTSTOFFPARTIKELN**
METHOD OF PRODUCING SOLID PARTICLES
PROCÉDÉ DE FABRICATION DE PARTICULES DE MATIÈRE SOLIDE

(30) Priorität: 18.12.2015 EP 15201214
(43) Veröffentlichungstag der Anmeldung: 24.10.2018
(73) Patentinhaber: LANXESS Deutschland GmbH, 50569 Köln (DE)
(72) Erfinder: WITT, Michael, 95488 Eckersdorf (DE); CASPERS, Nikolaj, 51377 Leverkusen (DE); SZCZECINA, Ulrich-Peter, 51375 Leverkusen (DE)
(86) Internationale Anmeldenummer: PCT/EP2016/079138
(87) Internationale Veröffentlichungsnummer: WO 2017/102311

(56) Entgegenhaltungen:
- EP-A1- 1 249 465
- EP-A2- 0 141 314
- EP-A2- 0 786 485
- WO-A1-2013/034499
- DE-A1- 19 913 661
- JP-A- H1 158 373
- US-A- 5 169 582

## Beschreibung

Die Erfindung betrifft ein Verfahren zur Herstellung von Feststoffpartikeln eines Materials mit speziellem Schmelzpunkt durch Extrusion einer zweiphasigen Mischung, enthaltend dieses Material und anschließender Zerkleinerung.

Viele niedermolekulare Verbindungen zeichnen sich durch einen definierten Schmelzpunkt aus, bei dem der Feststoff in eine niedrigviskose Schmelze (< 1·10⁴ Pa·s) übergeht.

Eine derartige niedrigviskose Schmelze kann auf konventionellen Compoundieranlagen, die im Wesentlichen aus einem Extruder und einer Granuliereinheit bestehen, nicht verarbeitet werden.

Diese Problematik wird am Beispiel von monomerem Caprolactam näher beschrieben: Monomeres Caprolactam wird heute sowohl im aufgeschmolzenen Zustand als auch als Feststoff ver-kauft.

Für den Transport von kleineren Mengen an Caprolactam oder den Transport über längere Ent-fernungen wird der Feststoff bevorzugt.

Insbesondere für die anionische Caprolactampolymerisation kann es vorteilhaft sein, in Caprolactam Feststoff-Partikeln bereits den Aktivator und/oder den Katalysator einzuarbeiten, um auf diese Weise lagerfähige Instantmischungen für die anionische Caprolactampolymerisation bereitzustellen.

Ein derartiges Konzept beschreibt die WO 2013/034499 A1. Caprolactam, welches in Tüten abgepackt und auf Paletten transportiert werden kann, basiert auf gekühlten Walzen, deren Unterseite in einen Caprolactam Schmelzepool eintauchen. Während einer Umdrehung dieser gekühlten Walzen friert das Caprolactam als Oberflächenschicht aus, die dann von einem Messer abgeschabt wird. Es resultieren Caprolactam Schuppen, deren Dicke über die Temperatur des Schmelzepools, der Umdrehungsgeschwindigkeit und der Kühlleistung variiert werden kann.

Derartige Caprolactam Schuppen haben den Nachteil, relativ viel Feinanteil zu enthalten und die flächigen Schuppen neigen darüber hinaus beim Transport zum Verkleben. Insbesondere zeigen derartige Schuppen nach dem Transport zum Kunden bei der sich anschließenden betrieblichen Weiterverarbeitung oft Probleme bei der Verwendung von Saugförderanlagen oder beim Einzug in Schneckenförderungen.

Gleiche Nachteile gelten für die in WO 2013/034499 A1 beschriebenen Instantmischungen, wenn diese als Schuppenware hergestellt wurden.

In der EP 0786485 A1 wird ein kontinuierliches Verfahren zur aktivierten Lactampolymerisation beschrieben mit den Schritten Zuführen eines Lactams und eines lagerstabilen, bei Raumtemperatur flüssigen Systems, welches zugleich Katalysator und Aktivator enthält zu einer beheizbaren kontinuierlich arbeitenden Misch- und Fördereinrichtung, Aufheizen des Lactams auf die Verfahrenstemperatur unter Mischen der Schmelzen und Polymerisation, Austragen der Schmelze als Strang und nachfolgende Kühlung und Granulierung. Eine Mischung von geschmolzenem mit festem Material und die Extrusion einer solchen Mischung ist nicht offenbart.

In der DE 2140193 B2 (bzw. in der korrespondierenden GB 1390971 A) wird ein Verfahren zur Herstellung gut rieselfähiger Caprolactam Feststoffpartikel beschrieben, welches im Wesentlichen darauf beruht, dass geschmolzenes Caprolactam über Düsen in eine Caprolactam-Feststoff-Wirbelschicht eingetragen wird. Auf diese Weise können sphärische Partikel mit verbesserter Rieselfähigkeit produziert werden, die beim Transport weniger verkleben und die besser weiterverarbeitet werden können.

Nachteil an dem in der DE 2140193 B2 beschriebenen Verfahren ist, dass dieses Verfahren einen hohen Aufwand in Bezug auf die Inertisierung der Wirbelschicht und in Bezug auf die Regelung von Durch-satz und Partikelgröße erfordert.

### Stellung der Aufgabe

Es wurde folglich nach einem Verfahren gesucht, das eine einfache, robuste, kostengünstige Herstellung von Feststoffpartikeln ermöglicht, bei dem die genannten Nachteile des Standes der Technik vermieden werden.

Diese Aufgabe wird durch ein Verfahren wie im unabhängigen Anspruch 1 beansprucht gelöst; vorteilhafte Ausführungen sind Gegenstand der davon abhängigen Ansprüche.

### Extrusion

Dabei kann die zu extrudierende, Mischung der Komponenten a1) und a2) durch
i) separates Beschicken des Extruders mit den Komponenten a1) und a2) oder
ii) Beschicken des Extruders mit der Komponente a2) und Erzeugen der Komponente a1) durch Erwärmung und/oder durch den Energieeintrag der Förder- und/oder Scherelemente, insbesondere Schnecken des Extruders auf eine Temperatur, bei der ein Teil der Komponente a2) geschmolzen ist oder
iii) Beschicken des Extruders mit der Komponente a1) und Erzeugen der Komponente a2) durch Kühlung des Extruders auf eine Temperatur, bei der ein Teil der Komponente a1) erstarrt,
erhalten werden.

Für die Beschickung des Extruders mit der festen Komponente a2) werden an die feste Komponente a2) keine weiteren Bedingungen gestellt.

Für die Beschickung des Extruders mit dem geschmolzenen Material der Komponente a1) wird vorzugsweise die Schmelztemperatur des Materials oder eine bis zu 20, insbesondere eine bis zu 10 °C höhere Temperatur gewählt. Sofern die Komponente a1) weitere Inhaltsstoffe enthält, die die Schmelztemperatur der Komponente a1) unter die des Materials verschieben, kann auch diese verringerte Schmelztemperatur oder eine bis zu 20, insbesondere eine bis zu 10 °C höhere Temperatur gewählt werden.

Die Temperatur der Schmelze der Komponente a1) ist mit der Temperatur der festen Phase der Komponente a2) in Abstimmung mit der Temperatur des Extruders und der inneren des Extruders erzeugten Reibungswärme so zu wählen, dass während der Extrusion das Vorliegen beider Phasen sichergestellt ist.

Bei dem erfindungsgemäßen Verfahren wird vorzugsweise ein Gewichtsverhältnis der flüssigen Komponente a1) zu der festen Komponente a2) von von 1 : 1 bis 1 : 4, insbesondere von 1 : 1,5 bis 1 : 4, insbesondere von 1 : 2,3 bis 1 : 4 gewählt.

Die Temperatur des Extruders kann dabei auch unterhalb der Schmelztemperatur des Materials liegen, da durch die Extrusion Reibungswärme, insbesondere durch die Förder-und/oder Scherlemente des Extruders, insbesondere der Schnecken, entsteht, die vorzugsweise ausreicht wenigstens einen Teil des Material in der Schmelze zu halten.

Als Extruder können Einschnecken-, Doppelschnecken- oder Planetenextruder verwendet werden. Die Doppelschneckenextruder können mit Förderelementen als auch zusätzlichen Mischelementen ausgestattet sein.

Ein bevorzugter Extruder ist ein Doppelschneckenextruder Am Ende des Plastifizierprozesses durch den Extruder wird die resultierende Paste, die vorzugsweise die Schmelztemperatur der Mischung besitzt, enthaltend die Komponenten a1) und a2), dann durch eine Lochplatte zu Strängen gepresst.

Bevorzugt, enthält die Paste wenigstens 80 Gew.-%, vorzugsweise wenigstens 90 Gew.-% des Materials.

### Zerkleinerung

Die Lochplatte kann dabei ein oder mehrere Öffnungen (Löcher) aufweisen. Vorzugsweise besitzt die Lochplatte 1 bis 20 Öffnungen, insbesondere runde Öffnungen, vorzugsweise mit einem Durchmesser von 0.1 bis 20 mm, insbesondere von 0.3 bis 0.8 mm.

Die sich bildenden Stränge werden im Anschluss zerkleinert.

Besonders vorteilhaft ist es, den aus der Lochplatte austretenden Strang durch ein rotierendes Messer in kleine Partikel zu zerteilen und diese Teilstücke dann über einen trockenen Luftstrom oder ein Inertgas abzukühlen, bis die Oberflächen nicht mehr klebrig sind und die Einzelpartikel bei Kontakt untereinander nicht verkleben. Nach entsprechender Abkühlung ist es möglich, die Partikel in größeren Gebinden zu sammeln und abzusacken.

Die Feststoffpartikel nach dem erfindungsgemäßen Verfahren haben bevorzugt eine Teilchengröße von 0.2 bis 30 mm, insbesondere von besitzen 0.2 bis 20 mm. Insbesondere sind die erhaltenen Partikel von sphärischer Gestalt mit einem Aspektverhältnis von 1 bis 3, vorzugsweise von 1 bis 1.8, insbesondere von 1 bis 1.4. Sie können auch eine zylindrische Form besitzen, vorzugsweise mit einem Durchmesser von 0.2 bis 30 mm, insbesondere 0.2 bis 20 mm und einer Länge von 0.3 bis 30 mm.

Alternativ kann auch ein sogenannter Flüssigabschlag analog zur klassischen Unterwassergranulierung eingesetzt werden, wobei Wasser für feuchtigkeitsempfindliche Materialien, wie zyklische Amiden, wie Caprolactam vorzugsweise nicht in Frage kommt. Für derartige Materialien können als flüssige Medien alle Medien verwendet werden, die wasserfrei sind und keine CH-aciden Gruppen aufweisen, beispielsweise unter Druck verflüssigtes CO₂.

### Material

Als Material wird vorzugsweise eines mit einem Schmelzpunkt bei Normaldruck von 50 bis 250 °C, insbesondere von 50 bis 170 °C, besonders bevorzugt von 50 bis 160 °C eingesetzt.

Ebenfalls bevorzugt ist ein Material das nicht-polymer ist. Gleichfall bevorzugt ist ein Material mit einem Molekulargewicht von kleiner 1000 g/mol, vorzugsweise kleiner 500 g/mol.

Besonders bevorzugte Materialien besitzen in geschmolzener Form bei ihrer Schmelztemperatur unter Normaldruck eine Viskosität von kleiner 1×10⁴ Pa·s.

Das Material der vorliegenden Erfindung ist ein zyklisches Amid ausgewählt aus Caprolactam, Lauryllactam oder deren Mischungen. Besonders bevorzugt wird als Material ausschließlich Caprolactam oder ausschließlich Lauryllactam eingesetzt.

Bei dem erfindungsgemäßen Verfahren können die Komponenten a1) und a2) jeweils unabhängig voneinander neben dem Material weitere Inhaltsstoffe enthalten. Als bevorzugte Inhaltsstoffe für den Fall, dass das Material ein zyklisches Amid, insbesondere Caprolactam, Lauryllactam oder deren Mischungen ist, sind Katalysatoren und/oder Aktivatoren für die anionische Caprolactampolymerisation zu nennen.

Diese Inhaltsstoffe können auch während der Extrusion über separat dem Verfahren zugegeben. Eine solche Zugabe erfolgt bevorzugt im Einzugsbereich des Extruders beispielsweise über Mischelemente, um vorzugsweise eine homogene Verteilung dieser Additive zu erzielen.

Im Hinblick auf die Mitverwendung von Aktivatoren oder Katalysatoren bei zyklischen Amiden als Material ist das Verfahren bevorzugt, bei dem jeweils wenigstens ein Aktivator oder wenigstens ein Katalysator eingesetzt wird.

Der Katalysator zur Polymerisation des zyklischen Amids wird vorzugsweise ausgewählt aus der Gruppe, bestehend aus Natriumcaprolactamat, Kaliumcaprolactamat, Bromid-Magnesium-capro-lactamat, Chlorid-Magnesium-caprolactamat, Magnesium-bis-Caprolactamat, Natriumhydrid, Natrium, Natriumhydroxid, Natriummethanolat, Natriumethanolat, Natriumpropanolat, Natrium-butanolat, Kaliumhydrid, Kaliumhydroxid, Kaliummethanolat, Kalium-ethanolat, Kaliumpropanolat und Kaliumbutanolat, bevorzugt aus der Gruppe bestehend aus Natriumhydrid, Natrium und Natriumcaprolactamat, besonders bevorzugt Natriumcaprolactamat.

Das Molverhältnis von zyklischem Amid zu Katalysator kann in weiten Grenzen variiert werden, es beträgt in der Regel 1: 1 bis 10000: 1, bevorzugt 5: 1 bis 1000: 1, besonders bevorzugt 1: 1 bis 500: 1.

Bevorzugt enthält die zu extrudierende Mischung
- 96 bis 99,9 Gew.% wenigstens eines zyklischen Amids, insbesondere 97 bis 99,9 Gew.%, besonders bevorzugt 97,5 bis 99,5 Gew.-% und
- 0,1 bis 4,0 Gew.% mindestens eines Katalysators, bevorzugt 0,1 bis 3 Gew.-%, besonders bevorzugt 0,5 bis 2,5 Gewichtsteile mindestens eines Katalysators,
jeweils bezogen auf das Gesamtgewicht der Mischung.

Als Aktivatoren eignen sich unter anderem aliphatische Diisocyanate, wie Butylendiisocyanat, Hexamethylendiisocyanat, Octamethylendiisocyanat, Decamethylendiisocyanat, Undecamethylen-diisocyanat, Dodecamethylendiisocyanat, 4,4'-Methylenbis(cyclohexylisocyanat), Isophorondiiso-cyanat, aromatische Diisocyanate, wie Toluyidiisocyanat, 4,4'-Methylenbis(phenyl)-isocyanat oder Polyisocyanate (z. B. Isocyanate von Hexamethylendiisocyanat), Allophanate (z. B. Ethylallophanat). Insbesondere können Mischungen der genannten Verbindungen als Aktivatoren eingesetzt werden.

Als Aktivatoren eignen sich weiterhin aliphatische Disäurchalogenide, wie Butylendisäurechlorid, Butylendisäurebromid, Hexamethylendisäurechlorid, Hexamethylendisäurebromid, Octamethylen-disäurechlorid, Octamethylendisäurebromid, Decamethylendisäurechlorid, Decamethylendi-säurebromid, Dodecamethylendisäurechlorid, Dodecamethylendisäurebromid, 4,4'-Methylenbis-(cyclohexyl-säurechlorid), 4,4'-Methylenbis(cyclohexylsäurebromid), Isophoron-disäurechlorid, Isophorondisäurebromid als auch aromatische Disäurehalogenide, wie Toluylmethylendisäurechlorid, Toluylmethylendisäurechlorid, 4,4'-Methylen-bis(phenyl)säurechlorid, 4,4'-Methylenbis-(phenyl)-säurebromid. Insbesondere können Mischungen der genannten Verbindungen als Aktivatoren eingesetzt werden.

Insbesondere bevorzugt ist als Aktivator mindestens eine Verbindung, ausgewählt aus der Gruppe bestehend aus aliphatischen Polyisocyanaten, insbesondere Diisocyanaten, aromatischen Polyisocyanaten, insbesondere Diisocyanaten, aliphatischen Disäurehalogeniden und aromatischen Disäurehalogeniden. Bevorzugt werden die Polyisocyanate, insbesondere aliphatische Polyisocyanate, als geblockte Isocyanate eingesetzt.

In einer bevorzugten Ausführungsform wird als Aktivator mindestens eine Verbindung eingesetzt, die ausgewählt ist aus der Gruppe Hexamethylendiisocyanat, Isophorondiisocyanat, Hexamethylen-disäurebromid, Hexamethylendisäurechlorid und deren Mischungen. Besonders bevorzugt wird Hexamethylendiisocyanat als Aktivator der Komponente al) eingesetzt, insbesondere als geblocktes Isocyanat. Geeignet als Aktivator ist beispielsweise ein Caprolactam-blockiertes 1,6-Hexamethylen-diisocyanat. Eine Lösung eines Caprolactam-blockierten 1,6-Hexa-methylendiisocyanats in Caprolactam ist kommerziell unter der Bezeichnung Brueggolen^{®} C20 von der Firma Brueggemann oder Addonyl^{®} 8120 der Firma Rhein Chemie Rheinau GmbH erhältlich.

Das Molverhältnis von zyklischem Amid zu Aktivator kann in weiten Grenzen variiert werden und beträgt in der Regel 1: 1 bis 10000: 1, bevorzugt 5: 1 bis 2000: 1, besonders bevorzugt 20: 1 bis 1000: 1.

Ebenfalls bevorzugt enthält die zu extrudierende Mischung
- 90 bis 99,8 Gew.% wenigstens eines zyklischen Amids, insbesondere 92 bis 99 Gew.%, besonders bevorzugt 97 bis 98,5 Gew.-% und
- 0,2 bis 10,0 Gew.% wenigstens eines Aktivators, insbesondere 1 bis 8 Gew.-%, besonders bevorzugt 1,5 bis 3 Gew.-%,
jeweils bezogen auf das Gesamtgewicht der Mischung.

Mit dem erfindungsgemäßen Verfahren lassen sich Feststoffpartikel mit einheitliche Masse und Form und mit sehr geringen Feinanteil herstellen. Die nach dem erfindungsgemäßen Verfahren erhaltenen Feststoffpartikel weisen zudem eine sehr gute Rieselfähigkeit auf und verkleben auch nicht bei längerer Lagerung.

### Beispiele:

### Beispiel 1:

| | |
|---|---|
| Verwendeter Extruder: | Doppelschneckenextruder (Leistritz ZSE 27 Maxx-480) |
| Heizzonen: | 11 (L/D: 48) |
| Lochplatte: | 1 konische Bohrungen mit 3.2 mm Durchmesser |
| Maschinenparameter: | Schneckendrehzahl: 80 UpM |
| Temperaturen: | Alle Zonen auf 68°C mit Ausnahme der Zone 1 (66°C) und Zone 11 (67°C) |

Die durch die Lochplatte der Granuliereinheit austretenden Stränge wurden durch eine mechanische Abschlageinheit abgeschlagen und nach einer Flugzeit in trockener Luft nach 1 - 3 Sekunden aufgefangen. In dieser Zeit waren die Partikel hinreichend abgekühlt, dass sie nicht verklebten.

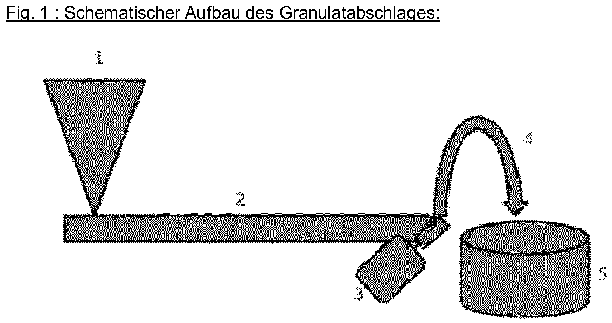

Die Verfahrensweise ist schematisch in Fig 1 dargestellt, wobei die einzelnen Komponenten folgende Bedeutung haben:
(1) Materialzuführung
(2) Extruder
(3) Handmixer mit Drahtkorb-Mischkopf
(4) Flugbahn der abgeschlagenen Paste-Partikel
(5) Auffangbehälter

Konkret wurden die austretenden Caprolactam Stränge mit Hilfe eines konventionellen Handmixers mit einem Drahtkorb-Rührer so abgeschlagen, dass sie in einer parabolischen Flugbahn in einem 2 m von der Düse entfernten Auffangbehälter landeten. Die 3-4 mm großen, weitgehend sphärischen oder zylindrischen Partikel wurde auf Raumtemperatur abgekühlt und konnten sehr auf Grund ihrer guten Rieselfähigkeit leicht umgeschüttet werden. Auch zeigten sich nach der Verpackung in Säcken und deren mechanischen Beanspruchung während der Lagerung eine sehr gute Stabilität hinsichtlich Verklebung. Es entstand zudem keinerlei Feinanteil.

Etwa 50 g jeder Mischung wurde in einem gasdichten Schraubglas verwahrt.

### Beispiel 2:

Wie Beispiel 1, als Einsatzstoff wurde aber eine Vormischung aus 96 Gew.-% Caprolactam und 4 Gew.-% Addonyl Kat N1 der Firma Rhein Chemie Rheinau GmbH (Natriumcaprolactamat 18 Gew.-%ig in Caprolactam) eingesetzt. Der Einzugsbereich des Extruders wurde mit Stickstoff inertisiert.

### Beispiel 3:

Wie Beispiel 1, als Einsatzstoff wurde aber eine Vormischung aus 98 Gew.-% Caprolactam und 2 Gew.-% Addonyl 8120 der Firma Rhein Chemie Rheinau GmbH (Caprolactam-geblocktes Hexamethylendiisocyanat mit einem Anteil von bis 2.5 Gew.-% Caprolactam) eingesetzt. Der Einzugsbereich des Extruders wurde mit Stickstoff inertisiert.

### Beispiel 4:

Wie Beispiel 1, als Einsatzstoff wurde aber eine Vormischung aus 93 Gew.-% Caprolactam, 2 Gew.-% Addonyl 8120 und 5 Gew.- % Addonyl 8112 (Kälteschlagzähmodifikator) der Firma Rhein Chemie Rheinau GmbH eingesetzt. Der Einzugsbereich des Extruders wurde mit Stickstoff inertisiert.

### Beispiel 5:

Nach einer Woche wurden die Behälter aus Beispiel 2 und 3 separat unter Vakuum aufgeschmolzen, die Schmelzen vereinigt und in ein auf 160°C temperiertes Becherglas gegossen.

Die anionische Polymerisation startete nach etwa 1 Minute und es konnte ein Polyamid 6 mit einem Restmonomergehalt von 1.2 Gew.-% hergestellt werden.

### Beispiel 6:

Nach einer Woche wurden die Behälter aus Beispiel 2 und 4 separat unter Vakuum aufgeschmolzen, die Schmelzen vereinigt und in ein auf 160°C temperiertes Becherglas gegossen.

Die anionische Polymerisation startete nach etwa 1 Minute und es konnte ein Polyamid 6 mit einem Restmonomergehalt von 1.4 Gew.-% hergestellt werden.

## Patentansprüche

1. Verfahren zur Herstellung von Feststoffpartikeln enthaltend zyklisches Amid ausgewählt aus Lauryllactam, Caprolactam oder deren Mischung, mit einem Schmelzpunkt bei Normaldruck von -20°C bis +300°C, **dadurch gekennzeichnet, dass** man eine Mischung enthaltend:
Komponente a1) enthaltend das zyklische Amid und ggf. weitere Inhaltsstoffe, in geschmolzener Form und
Komponente a2) enthaltend das zyklische Amid und ggf. weitere Inhaltsstoffe, in fester Form
mittels eines Extruders zu einer Paste vermischt, diese durch eine Lochplatte zu Strängen presst und die Stränge zerkleinert, wobei die Temperatur der Schmelze der Komponente a1) mit der Temperatur der festen Form der Komponente a2) in Abstimmung mit der Temperatur des Extruders und der im inneren des Extruders erzeugten Reibungswärme so gewählt wird, dass während der Extrusion das Vorliegen einer festen und einer geschmolzenen Phase sichergestellt ist.

2. Verfahren gemäß Anspruch 1, **dadurch gekennzeichnet, dass** das zyklisches Amid Caprolactam ist.

3. Verfahren gemäß wenigstens einem der Ansprüche 1 bis 2, **dadurch gekennzeichnet, dass** die Paste wenigstens 80 Gew.-%, vorzugsweise wenigstens 90 Gew.-% des zyklischen Amids enthält.

4. Verfahren gemäß wenigstens einem der Ansprüche 1 bis 3, **dadurch gekennzeichnet, dass** die Feststoffpartikel eine sphärische oder zylindrische Form besitzen.

5. Verfahren gemäß wenigstens einen der Ansprüche 1 bis 4, **dadurch gekennzeichnet, dass** die Feststoffpartikel eine Größe von 0.2 bis 20 mm besitzen.

6. Verfahren gemäß wenigstens einem der Ansprüche 1 bis 5, **dadurch gekennzeichnet, dass** das Verhältnis von Komponente a1) zu Komponente a2) in der Mischung von 1 : 1 bis 1 : 4 beträgt.

7. Verfahren gemäß wenigstens einem der Ansprüche 1 bis 6, **dadurch gekennzeichnet, dass** die Zerkleinerung mittels mechanischer Kraft erfolgt.

8. Verfahren gemäß wenigstens einem der Ansprüche 1 bis 7, **dadurch gekennzeichnet, dass** es sich bei den weiteren Inhaltsstoffen um Katalysatoren und/oder Aktivatoren für die anionische Caprolactampolymerisation handelt.

9. Verfahren gemäß wenigstens einem der Ansprüche 1 bis 8, **dadurch gekennzeichnet, dass** es sich bei den weiteren Inhaltsstoffen um Katalysatoren ausgewählt aus der Gruppe, bestehend aus Natriumcaprolactamat, Kaliumcaprolactamat, Bromid-Magnesium-capro-lactamat, Chlorid-Magnesium-caprolactamat, Magnesium-bis-Caprolactamat, Natriumhydrid, Natrium, Natriumhydroxid, Natriummethanolat, Natriumethanolat, Natriumpropanolat, Natrium-butanolat, Kaliumhydrid, Kaliumhydroxid, Kaliummethanolat, Kalium-ethanolat, Kaliumpropanolat und Kaliumbutanolat und/oder Aktivatoren ausgewählt aus der Gruppe, bestehend aus aliphatischen Diisocyanaten, aromatischen Diisocyanaten und Polyisocyanaten und/oder Aktivatoren ausgewählt aus der Gruppe bestehend aus aliphatischen Disäurehalogeniden und aromatischen Disäurehalogeniden handelt.

## Claims

1. Process for the production of solid particles comprising cyclic amide selected from laurolactam, caprolactam or a mixture of these, with a melting point from -20°C to +300°C at atmospheric pressure, **characterized in that** a mixture comprising:
component a1) comprising the cyclic amide and
optionally further ingredients in molten form and
component a2) comprising the cyclic amide and
optionally further ingredients in solid form is mixed by means of an extruder to give a paste,
this is forced through a pelletizing die to give strands, and the strands are comminuted, wherein the temperature of the melt of component a1) is selected together with the temperature of the solid form of component a2) and according to the temperature of the extruder and the frictional heat generated inside the extruder in such a way that the presence of a solid phase and a molten phase is ensured during the extrusion.

2. Process according to Claim 1, **characterized in that** the cyclic amide is caprolactam.

3. Process according to at least one of Claims 1 to 2, **characterized in that** the paste comprises at least 80% by weight, preferably at least 90% by weight, of the cyclic amide.

4. Process according to at least one of Claims 1 to 3, **characterized in that** the shape of the solid particles is spherical or cylindrical.

5. Process according to at least one of Claims 1 to 4, **characterized in that** the size of the solid particles is from 0.2 to 20 mm.

6. Process according to at least one of Claims 1 to 5, **characterized in that** the ratio of component a1) to component a2) in the mixture is from 1:1 to 1:4.

7. Process according to at least one of Claims 1 to 6, **characterized in that** the comminution is achieved by means of mechanical force.

8. Process according to at least one of Claims 1 to 7, **characterized in that** the further ingredients are catalysts and/or activators for the ionic caprolactam polymerization.

9. Process according to at least one of Claims 1 to 8, **characterized in that** the further ingredients are catalysts selected from the group consisting of sodium caprolactamate, potassium caprolactamate, magnesium bromide caprolactamate, magnesium chloride caprolactamate, magnesium biscaprolactamate, sodium hydride, sodium, sodium hydroxide, sodium methoxide, sodium ethoxide, sodium propoxide, sodium butoxide, potassium hydride, potassium hydroxide, potassium methoxide, potassium ethoxide, potassium propoxide and potassium butoxide and/or activators selected from the group consisting of aliphatic diisocyanates, aromatic diisocyanates and polyisocyanates and/or activators selected from the group consisting of aliphatic diacyl halides and aromatic diacyl halides.

## Revendications

1. Procédé de fabrication de particules solides contenant un amide cyclique choisi parmi le lauryllactame, le caprolactame ou un mélange de ceuxci, ayant un point de fusion sous la pression normale de -20 °C à +300 °C, **caractérisé en ce qu'**on mélange à l'aide d'une extrudeuse, pour obtenir une pâte, un mélange contenant :
un composant a1) contenant l'amide cyclique,
éventuellement d'autres constituants, sous forme fondue
et
un composant a2) contenant l'amide cyclique et
éventuellement d'autres constituants, sous forme solide,
on presse cette pâte à travers une filière pour obtenir des extrudats et on broie les extrudats, la température de la masse fondue du composant a1) étant choisie avec la température de la forme solide du composant a2) en concordance avec la température de l'extrudeuse et la chaleur de frottement produite à l'intérieur de l'extrudeuse, de telle sorte que l'on soit assuré,
pendant l'extrusion, de la présence d'une phase solide et d'une phase fondue.

2. Procédé selon la revendication 1, **caractérisé en ce que** l'amide cyclique est le caprolactame.

3. Procédé selon au moins l'une des revendications 1 à 2, **caractérisé en ce que** la pâte contient au moins 80 % en poids, de préférence au moins 90 % en poids de l'amide cyclique.

4. Procédé selon au moins l'une des revendications 1 à 3, **caractérisé en ce que** les particules solides ont une forme sphérique ou cylindrique.

5. Procédé selon au moins l'une des revendications 1 à 4, **caractérisé en ce que** les particules solides ont une grosseur de 0,2 à 20 mm.

6. Procédé selon au moins l'une des revendications 1 à 5, **caractérisé en ce que** le rapport du composant a1) au composant a2) dans le mélange est de 1:1 à 1:4.

7. Procédé selon au moins l'une des revendications 1 à 6, **caractérisé en ce que** le broyage a lieu à l'aide d'une force mécanique.

8. Procédé selon au moins l'une des revendications 1 à 7, **caractérisé en ce que**, pour ce qui concerne les autres constituants, il s'agit de catalyseurs et/ou d'activateurs pour la polymérisation anionique du caprolactame.

9. Procédé selon au moins l'une des revendications 1 à 8, **caractérisé en ce que**, pour ce qui concerne les autres constituants, il s'agit de catalyseurs choisis dans le groupe consistant en le caprolactamate de sodium, le caprolactamate de potassium, le caprolactamate de bromure de magnésium, le caprolactamate de chlorure de magnésium, le biscaprolactamate de magnésium, l'hydrure de sodium, le sodium, l'hydroxyde de sodium, le méthanolate de sodium, l'éthanolate de sodium, le propanoate de sodium, le butanoate de sodium, l'hydrure de potassium, l'hydroxyde de potassium, le méthanolate de potassium, l'éthanolate de potassium, le propanolate de potassium et le butanolate de potassium et/ou de catalyseurs choisis dans le groupe consistant en les diisocyanates aliphatiques, les diisocyanates aromatiques et les polyisocyanates et/ou d'activateurs choisis dans le groupe consistant en les halogénures de diacyle aliphatique et les halogénures de diacyle aromatique.
